# EUROPEAN PATENT SPECIFICATION

(11) **EP 2 392 879 B1**
(45) Date of publication and mention of the grant of the patent: **26.12.2018**
(21) Application number: 11168480.9
(22) Date of filing: 01.06.2011
(51) Int. Cl.: F26B 17/10, F01K 17/06

(54) **Process and dryer for drying bulk material**
Verfahren und Trockner zum Trocknen von Schüttgut
Procédé et séchoir pour sécher du matériel en vrac

(30) Priority: 01.06.2010 SE 1050550
(43) Date of publication of application: 07.12.2011
(73) Proprietor: OUTOTEC (FINLAND) OY, 02230 Espoo (FI)
(72) Inventor: Näslund, Bengt-Olof, 903 64 UMEÅ (SE)
(74) Representative: Zacco Sweden AB

(56) References cited:
- EP-A1- 1 843 114
- WO-A1-00/73703
- WO-A1-88/10359
- US-A- 5 291 668
- MÜNTER C ET AL: "EXERGY STEAM DRYING AND ITS ENERGY INTEGRATION", INTERNATIONAL NORDIC BIOENERGY CONFERENCE, 1 - 5 SEPTEMBER 2003,, 1 September 2003 (2003-09-01), pages 271-273, XP001562268,
- VAN DEVENTER H: "Industrial Superheated Steam Drying", 20040101, no. L202, 1 January 2004 (2004-01-01), pages 1-23, XP007918830,
- L.FRAGERNÄS, J.BRAMMER, C.WILLÉN,M.LAUER, F.VERHOEFF: "Review: Drying of biomass for second generation synfuel production", BIOMASS AND BIOENERGY, vol. 34, 26 May 2010 (2010-05-26), pages 1267-1277, XP002695143, DOI: 10.1016/j.biombioe.2010.04.005
- WAHLUND B., YAN J., WESTERMARK M.: "A total energy system of fuel upgrading by drying biomass feedstock for cogeneration: a case study of Skellefteå bioenergy combine", BIOMASS & BIOENERGY, vol. 23, no. 4, October 2002 (2002-10), pages 271-281, XP002695144, DOI: 10.1016/S0961-9534(02)00055-7

## Description

### Field of invention

The present invention relates to a process for drying bulk material in a dryer. The present invention also relates to a combination of a pneumatic dryer (1,1',1") for drying bulk material and a steam turbine for carrying out the process for drying bulk material, a bio energy combine comprising the dryer and the use of the dryer.

### Background

Drying of wet bulk material, typically biomass of wooden, peat or agricultural origin in a dryer is very energy consuming and costly. Previously known dryers are typically configured with a circulation conduit where a drying gas is circulated and heated by a heat exchanger which is supplied by heat from a combustion chamber. The article "Exergy steam drying and its energy integration" by Münter C et al published in International Nordic Bioenergy Conference 1-5 September 2003 ,page 271-273 describes another type of steam dryer with a circulation conduit. Another article " Drying of biomass for second generation synfuel production" by L. Fargernäs, J. Brammer, C.Willen. M.Lauer, F.Verhoeff published in Biomass and Bioenergy, vol. 34, 26 of May 2010, pages 1267-1277, describes a combined pellet and CHP plant having a pneumatic closed loop conveying steam dryer for drying biomass provided with a heat exchanger for indirectly heating the wet biomass being conveyed through the tubes of the heat exchanger. The CHP plant provides steam which condenses on the outside of the heat exchanger tubes.

### Summary of the invention

It is an object of the invention to provide a drying process for drying bulk material and a dryer for drying bulk material which utilizes accessible energy efficiently.

A first aspect of the present invention achieves this and other objects by providing a process for drying bulk material in a pneumatic dryer having a closed circulation conduit, the process comprises the steps of generating a flow of a drying medium through the circulation conduit, feeding bulk material to the flow of drying medium in the circulation conduit by an inlet feeding device, drying the bulk material in a drying conduit by transferring heat from the drying medium, separating the bulk material from the drying medium by separating means and discharging the bulk material from the dryer,
and supplying a first heating medium to a first heat exchanger and providing a first heating step wherein the drying medium is conveyed to the first heat exchanger and is indirectly heated by the first heating medium.
The process further comprises the steps of supplying a second heating medium to a second heat exchanger, such that the first heating step is followed by a second heating step wherein the drying medium is conveyed to the second heat exchanger and is indirectly heated by the second heating medium, and carrying out the first heating step and the second heating step prior to feeding bulk material to the flow of drying medium and supplying the first heating medium and the second heating medium from a steam turbine and operate the first and the second heat exchanger as a steam turbine condensers, and extracting the first heating medium from a first steam outlet of a steam turbine at a first heating medium pressure P1 and extracting the second heating medium from a second steam outlet of the steam turbine at a second heating medium pressure P2, wherein P1 is lower than P2.

A second aspect of the invention provides a combination of a pneumatic dryer for drying bulk material and a steam turbine for carrying out the process, said dryer having a closed circulation conduit being adapted to be filled with a drying medium, a fan connected to the circulation conduit for generating a flow of drying medium,
an inlet feeding device connected to the circulation conduit for feeding bulk material to the dryer, a drying conduit connected to the circulation conduit wherein the bulk material is dried by transferring heat from the drying medium, a separating means connected to the drying chamber for separating the bulk material from the drying medium and discharging means connected to the separating means for discharging the bulk material from the dryer.
The dryer has at least a first heat exchanger and at least a second heat exchanger serially connected to the circulation conduit for heating the drying medium, wherein the first heat exchanger is supplied with a first heating medium,. The combination of the pneumatic dryer and the steam turbine further comprises that the second heat exchanger is supplied with a second heating medium, and that the first heat exchanger and the second heat exchanger are connected to the circulation conduit downstream of the separating means and upstream of the inlet feeding device in relation to the flow direction of the drying medium, that the steam turbine is provided with a first steam outlet and a second steam outlet, and that the first heat exchanger and the second heat exchanger are connected to the steam turbine and are operated as a steam turbine condensers, and that the first heat exchanger is connected to the first outlet via a first connecting means, and the second heat exchanger is connected to the second outlet via a second connecting means, and supplying the first heating medium and the second heating medium from the steam turbine and operate the first and second heat exchanger as steam turbine condensers, and extracting the first heating medium from a the first steam outlet of a the steam turbine at a first heating medium pressure P1 and extracting the second heating medium from a the second steam outlet of the steam turbine at a second heating medium pressure P2, wherein P1 is lower than P2.

One advantage of the invention is that the first heat exchanger and the second heat exchanger are separately supplied with the first and the second heating medium. This enables the utilization of several heat sources to supply the necessary heat for indirect heating of the drying medium. This has the effect that the drying medium present in the circulation conduit of the dryer is stepwise heated to a desired temperature level.
Various industrial environments provide waste heat or superfluous heat; such heat is usually less expensive than heat produced separately for a particular purpose. However the energy content of waste heat or superfluous heat provided from one heat source, taken separately, is sometimes insufficient for heating the drying medium to a desired temperature level. By using waste heat or superfluous heat from one or more heat sources for heating the drying medium, improved utilization of accessible heat is achieved, and the drying process is less expensive. The energy efficiency is also improved since the waste heat or superfluous heat can be used efficiently instead of being released into the environment.
By configuring the dryer carrying out the process according to the invention with at least two separate heating steps by at least two separately heated heat exchangers is the dryer suitable to be implemented in a variety of industrial environments. Advantageously, several different heat sources together supply the energy necessary to cover the total heat demand of the dryer. For instance, the dryer may be located in an industrial environment where the first heat exchanger is supplied with steam from a steam generation plant and the second heat exchanger is supplied with hot thermal oil from an industry.

According to one embodiment of the process are the first heating step and the second heating step carried out before, prior to, feeding bulk material into the flow of drying medium. This has the functional benefit that the drying medium is heated to a desired temperature level in advance of the introduction of the bulk material into the drying medium. Moreover, deposits on the heat conducting surfaces are less than if the heat exchangers are connected into the circulation conduit after, downstream of, the inlet feeding device.
According to one embodiment of the process are the operating conditions of each heat exchanger separately controlled. The operating condition of each heat exchanger depends on the accessible energy from the heat sources. Each heat exchanger is separately supplied with heating medium, hence each heat exchanger operates differently from the other heat exchanger/s. It is therefore beneficial to control each heat exchanger separately and to optimize the heat transfer.

The first heating medium and the second heating medium are selected to provide efficient heat transfer from the accessible heat sources to the heat exchangers.
According to one embodiment comprises the process supplying the first heat exchanger and the second heat exchanger with different types of heating medium, thus the first heating medium and the second heating medium comprises different types of medium.

According to one embodiment of the dryer comprise/s the first heating medium and/or the second heating medium a non-compressible medium such as thermal oil or hot water. According to another embodiment of the dryer comprise/s the first heating medium and/or the second heating medium a compressible medium such as steam or hot flue gases or hot industrial gases. Industrial gases typically consists of a mixture of different gases.

According to one embodiment comprises the process supplying steam to the first heat exchanger and hot thermal oil to the second heat exchanger. According to an alternative embodiment comprises the process supplying hot flue gases to the first heat exchanger and steam to the second heat exchanger. According to an alternative embodiment comprises the process supplying hot water to the first heat exchanger and steam to the second heat exchanger.

According to an alternative embodiment comprises the process supplying the first heat exchanger and the second heat exchanger with the same type of heating medium, thus the first heating medium and the second heating medium may comprise the same type of medium such as steam. It has to be noted that in such case are the first heating medium and the second heating medium different from one another in that they disclose different parameters such as pressure and/or temperature.

According to one embodiment comprises the process supplying the first heat exchanger with steam having pressure P1 and temperature t1 and supplying the second heat exchanger with steam having pressure P2 and temperature t2, wherein t2 is essentially equal to t1, and P2 is substantially different from P1. According to one embodiment of the dryer comprises the first heating medium steam having pressure P1 and temperature t1, and the second heating medium comprises steam having pressure P2 and temperature t2, wherein t2 is essentially equal to t1, and P2 is substantially different from P1. This provides that the drying medium is stepwise heated to a desired temperature level.

The first heat exchanger is connected to the first heat source via a first connecting means and the second heat exchanger is connected to the second heat source via a second connecting means. Hence said first connecting means are separated from said second connecting means. The first connecting means and the second connecting means are unconnected and independent of each other.

This enables the first and the second heating medium to be separately supplied to the first heat exchanger and the second heat exchanger respectively, and also enables the supply of at least two different heating medium comprising respectively different energy content to the dryer.

Each heat exchanger is selected and adapted in accordance with the accessible heat source and heating medium. It is particularly efficient to use a heat exchanger having large heat conducting surfaces such as a shell and tube heat exchanger or the like. Other types of heat exchangers like a plate heat exchanger is also suitable. The first heat exchanger and/or the second heat exchanger comprise preferably a gas/gas heat exchanger, a liquid/gas heat exchanger or a condenser. The dryer comprises advantageously a combination of different types of heat exchangers. Alternatively are the first heat exchanger and the second heat exchanger of the same type. In case the heating medium comprises steam, the heat exchanger is preferably a shell and tube heat exchanger designed as a condenser.
In case the heating medium comprises thermal oil, the heat exchanger is preferably designed as a plate heat exchanger.

According to one embodiment of the dryer is the first and/or the second heat exchanger adapted to provide a substantially straight flow path for the drying medium through the heat exchanger. This is advantageous in that a large volume of drying medium is efficiently heated with a minimum of pressure loss.
According to one embodiment of the dryer is the first heat exchanger and/or the second heat exchanger configured a shell and tube heat exchanger having a housing, a shell, comprising an inlet side and an outlet side, a plurality of longitudinally extended, straight, channels aligned with the axial direction of the heat exchanger arranged between the inlet side and the outlet side and wherein each channel is provided with a channel inlet and a channel outlet at opposite ends of the channel.
The housing comprises also a heating medium inlet and a heating medium outlet. The heating medium is conducted from the heating medium inlet to the heating medium outlet on the housing side of the channels. The channels provide a drying medium flow path through the heat exchanger. The channels comprise heat conducting material for transferring heat from the heating medium to the drying medium.

The parameters such as temperature and pressure of the first and the second heating medium, are controlled and measured at each heat source and/or at the heating medium inlet of each heat exchanger.

According to one embodiment comprises the process supplying the first heating medium at a first heating medium temperature t1, and supplying the second heating medium at a second heating medium temperature t2, wherein t2 differs substantially from t1.

According to another embodiment of the process is the second heating medium temperature t2 different from the first heating medium temperature t1 when the second heating medium temperature t2 falls outside a temperature range of said first heating medium temperature t1 plus or minus 0.5 degree Celsius (t2 < t1-0.5 °C or t2 > t1+0.5 °C).

According to another embodiment comprises the process that temperature of the second heating medium t2 is preferably higher than the temperature of the first heating medium temperature t1. This has the effect that the gaseous medium is heated stepwise in the heat exchange system.

According to another embodiment of the process is the temperature of the second heating medium t2 at least 3 degrees Celsius above the temperature of the first heating medium t1. According to another embodiment of the process is the temperature of the second heating medium t2 at least 10 degrees Celsius above the temperature of the first heating medium t1.

According to an alternative embodiment comprises the process supplying the first heating medium at a first heating medium temperature t1, and supplying the second heating medium at a second heating medium temperature t2, wherein t2 is essentially equal to t1, thus the second heating medium temperature t2 essentially corresponds to the first heating medium temperature t1.

According to one embodiment of the process is the second heating medium temperature t2 equal to the first heating medium temperature t1 when the second heating medium temperature t2 falls within a temperature range of said first heating medium temperature t1 plus or minus 0.5 degree Celsius (t1-0.5 °C ≤ t2 ≤ t1+0.5 °C).

The stepwise heating effect is also achieved when the second heating medium temperature t2 is essentially equal to the first heating medium temperature t1.

According to one embodiment comprises the process supplying the first heating
medium at a first heating medium pressure P1, and supplying the second heating medium at a second heating medium pressure P2, wherein P2 differs substantially from P1.

According to one embodiment comprises the process that the second heating medium pressure P2 is different from the first heating medium pressure P1 when the second heating medium pressure P2 falls outside a pressure range of said first heating medium pressure P1 plus or minus 0.5 Bar (P2 < P1-0.5 Bar or P2 > P1+0.5 Bar).

According to one embodiment of the process is the second heating medium pressure P2 higher than the first heating medium pressure P1. According to another embodiment of the process is the second heating medium pressure P2 at least 1 Bar above said first heating medium pressure P1.

According to an alternative embodiment comprises the process supplying the first heating medium at a first heating medium pressure P1, and supplying the second heating medium at a second heating medium pressure P2, wherein P2 is essentially equal to P1, thus the second heating medium pressure essentially corresponds to the first heating medium pressure.

According to one embodiment of the process is the second heating medium pressure P2 equal to the first heating medium pressure P1 when the second heating medium pressure P2 falls within a pressure range of said first heating medium pressure P1 plus or minus 0.5 Bar (P1-0.5 Bar ≤ P2 ≤ P1+0.5 Bar).

According to another embodiment of the process is the first heating medium extracted from a first steam outlet of a steam turbine at a first heating medium pressure P1 and the second heating medium is extracted from a second steam outlet of the same steam turbine at a second heating medium pressure P2, wherein P1 is lower than P2. The first heating medium pressure P1 is advantageously within the pressure range 5-20 Bar and the second heating medium pressure P2 is advantageously within the pressure range 15-30 Bar.

The dryer is supplied with heat from different heat sources. A steam generation plant where steam is produced and used for different purposes such as a combined heat and power plant, a condense power plant are suitable to provide energy to the dryer. A steam generation plant typically comprises heat sources like a turbine or a combustion chamber, a boiler furnace or similar. Each of these heat sources are suitable to supply energy to a dryer via a heating medium such as pressurized steam or hot flue gases or heated thermal oil or hot water.
Other industrial processes such as a saw mill, paper and pulp factory or other heavy industry like a smelting plant also provide heat sources of different kinds which are suitable to supply energy to a dryer via a heating medium such as pressurized steam or hot flue gases or industrial gases or heated thermal oil or hot water.

According to one embodiment comprises the process supplying the first heating medium from a turbine, a combustion chamber or an industrial process. According to one embodiment of the dryer comprises the first heat source a turbine, a combustion chamber or an industrial process. The turbine may be of different types such as a steam turbine, a gas turbine or an expander turbine.
According to another embodiment comprises the process supplying the second heating medium from a turbine, a combustion chamber or an industrial process. According to another embodiment of the dryer comprises the second heat source a turbine, a combustion chamber or an industrial process.

According to one embodiment comprises the process supplying the first heating medium and/or the second heating medium from a steam turbine. Thus the first heating medium and/or the second heating medium comprise/s pressurized steam supplied from a steam turbine.
According to an alternative embodiment comprises the process supplying the first heating medium or the second heating medium from a steam turbine. According to one embodiment of the dryer is the first heat exchanger or the second heat exchanger connected to a steam turbine.

According to an alternative embodiment of the dryer are the first heat exchanger and the second heat exchanger connected to a steam turbine having at least a first steam outlet and at least a second steam outlet. The first heat exchanger is connected to the first steam outlet and the second heat exchanger is connected to the second steam outlet.

It is beneficial to supply at least one heat exchanger in the dryer with pressurized steam from a steam turbine. A steam turbine is typically provided with at least one condenser. By supplying pressurized steam from a steam turbine to the heat exchangers in the dryer, a separate condenser for the operation of the steam turbine is unnecessary. This improves the energy efficiency of the steam turbine and of the combination of the dryer and the steam turbine.

According to one embodiment comprises the process extracting the first heating medium from a first steam outlet of a steam turbine at a first heating medium pressure P1 and extracting the second heating medium from a second steam outlet of the steam turbine at a second heating medium pressure P2, wherein P1 is lower than P2. This improves the thermal efficiency of the steam turbine.

The fan may be connected to the circulation conduit in different positions. The bulk material is preferably not conveyed through the fan. The fan is therefore preferably connected to the circulation conduit downstream of the separating means and upstream to the inlet feeding device in relation to flow direction of the drying steam.

According to one embodiment of the dryer are the first heat exchanger and the second heat exchanger connected to the circulation conduit downstream of the separating means and upstream of the inlet feeding device in relation to the flow direction of the drying medium. This has the functional benefit that the bulk material is not conveyed through the first and the second heat exchanger which decreases the deposits on the heat conducting surfaces.

According to another embodiment of the dryer are at least the first heat exchanger and at least the second exchanger serially connected to the circulation conduit upstream of the fan in relation to the flow direction of the drying medium.

According to one embodiment of the dryer is the fan connected to the circulation conduit downstream of the separating means and upstream of, the first heat exchanger in relation to the flow direction of the drying medium. The drying medium temperature varies along the length of the circulation conduit. The drying medium temperature is typically at a minimum level in a position in the circulation conduit adjacent and following the separating means, in particular at the drying medium outlet of the separating means. The workload of the fan decreases at a lower drying medium temperature i.e. less volume. A part of the workload of the fan is transferred to heat which increases the temperature of the drying medium. The energy efficiency is thereby improved.

According to another embodiment of the dryer is at least the first heat exchanger connected to the circulation conduit after, downstream of, the separating means and before, upstream of, the fan in relation to the conveying direction of the drying medium. The fan is thus followed by at least the second heat exchanger connected to the circulation conduit. This arrangement is particularly advantageous when the available heating medium supplied from a heat source has a heating medium temperature only slightly above the temperature of the drying medium. It is then beneficial to locate a heat exchanger upstream of the fan in relation to flow direction of the drying medium, where the heat in the heating medium is most efficiently transferred to the drying medium.

According to another embodiment of the dryer are all heat exchangers, the first and the second heat exchanger, serially connected to the circulation conduit after, downstream of, the separating means and before, upstream of, the fan in relation to the flow direction of the drying medium. This is beneficial for structural reasons but also for functional reasons similar to those previously mentioned.

According to another embodiment of the dryer is an additional heat exchanger serially connected to the circulation conduit downstream of the separating means and upstream of the inlet feeding device in relation to the flow direction of the drying medium.

It is to be noted that the invention is not limited to a process and a dryer having only two heat exchangers. The process and dryer may alternatively be adapted to have one or more further heat exchangers connected to the circulation conduit.

According to another embodiment of the dryer is an additional heat exchanger connected to the circulation conduit downstream of the inlet feeding device in relation to the flow direction of the drying medium. In some applications is it useful to connect an additional heat exchanger downstream of the inlet feeding device. In particular seasonal humidity variations in the bulk material can be met by the increased drying capacity of an additional heat exchanger since the drying medium temperature is maintained longer.

According to one embodiment of the dryer is a first condensate receptacle connected to the first heat exchanger for collecting a first heating medium condensate and a second condensate receptacle is connected to the second heat exchanger for collecting a second heating medium condensate. According to one embodiment of the dryer is the second condensate receptacle is connected to the first condensate receptacle.
According to one embodiment of the dryer is the first condensate receptacle connected to the first heat exchanger via a steam duct. This improves the energy efficiency of the dryer.

Furthermore the invention also relates to a bio energy combine according to claim 20. The bio energy combine comprises a steam generation plant and a dryer. The steam generation plant comprises at least one steam turbine. The pneumatic dryer and the at least one steam turbine of the steam generation plant are the combination of a pneumatic dryer and a steam turbine according to one or more of claims 12-14. The steam turbine is connected to the first heat exchanger and/or the second heat exchanger of the dryer for supplying steam as heating medium to the dryer.
According to one embodiment comprises the bio energy combine a steam heat exchanger. According to one embodiment of the bio energy combine comprises the dryer a surplus steam outlet. The steam heat exchanger is connected to the surplus steam outlet for recovering the heat in the surplus steam from the dryer.
According to another embodiment of the bio energy combine comprises the steam turbine at least a first steam outlet and at least a second steam outlet. The steam outlet is for example a bleeder outlet or an extraction outlet or exhaust outlet.
According to another embodiment of the bio energy combine is the steam turbine provided with at least a first steam inlet and at least a second steam inlet.
According to a another embodiment of the bio energy combine is the steam heat exchanger connected to the second steam inlet of the steam turbine for supplying clean steam to the steam turbine.
The invention also relates to a use of a dryer in combination with a steam generation plant. According to one embodiment of the invention is the dryer used in combination with a steam generation plant comprising a combustion chamber and/or at least one power generating steam turbine.
The present invention is defined by the appended independent claims. Various embodiments of the invention are set forth by the appended dependent claims as well as by the following description and the accompanying drawings.

### Brief description of the figures

Further objects, features and advantages of the present invention will appear from the following detailed description of the invention, wherein embodiments of the invention will be described in more detail with reference to the accompanying drawings, in which:
Fig 1a shows a schematic flow scheme of one embodiment of a dryer 1 according to the invention.
Fig 1b shows an optional additional heat exchanger.
Fig 2 shows a schematic flow scheme of one embodiment of a dryer 1' according to the invention.
Fig 3 shows a diagram illustrating stepwise heating of the drying medium in the dryer.
Fig 4 shows a schematic flow scheme of one embodiment of a bio energy combine 34 comprising a dryer according to the invention.
Fig 5 shows a schematic flow scheme of one embodiment of a bio energy combine 34' comprising a dryer according to the invention.

In this specification 'bulk material' has a broad meaning which includes any moist or wet solid organic particulate bulk material with a size distribution and particle density suitable for pneumatic transport. The bulk material particularly includes biomass derived from plants. Examples include agricultural residues and wastes (stalks, straw etc), wood based feedstock (wood chips), forest residues; sawmill wastes, peat, energy crops. These bulk materials usually have an initial moisture content of at least 30% moisture on a weight basis, typically above 40% moisture.

### Detailed description

Embodiments of the present invention will hereinafter be described in more detail with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

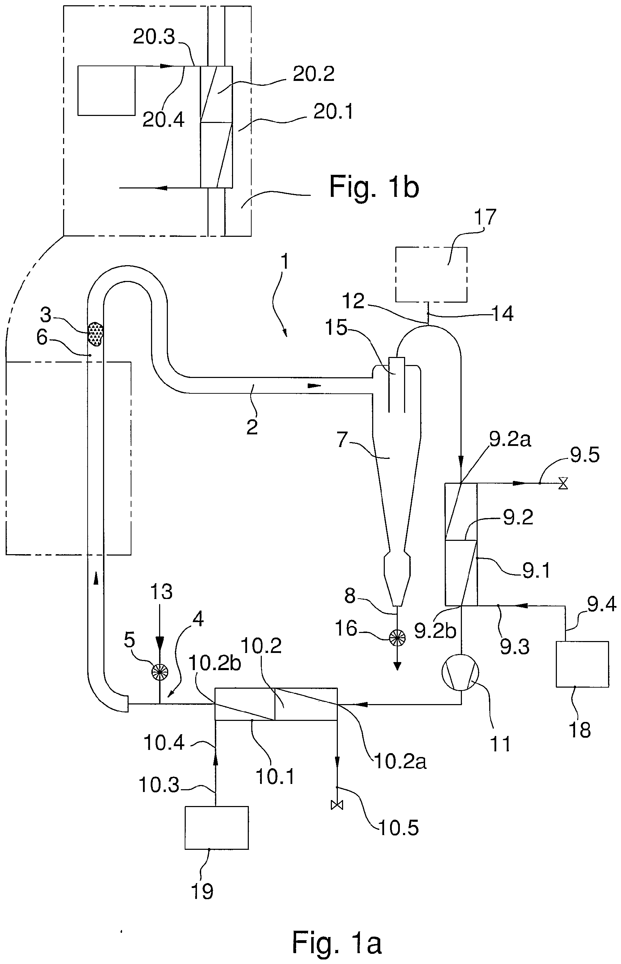

With reference to Fig.1 a one embodiment of a dryer 1 carrying out a process according to invention is shown.

Fig. 1a shows a flow scheme of the dryer 1, in particular a pneumatic steam dryer for drying bulk material. The dryer is suitable for drying wet bulk material such as biomass of wood, peat or agricultural origin by heat transfer from a drying medium 3 such as steam. The dryer is particularly suitable for drying wood chips or sawdust.

The dryer comprises a circulation conduit 2, a bulk material inlet 4, an inlet feeding device 5, a drying chamber 6, a separating means 7, a bulk material outlet 8, discharging means 16, a first heat exchanger 9.1 a second heat exchanger 10.1, a fan 11 and a surplus steam outlet 12.

The circulation conduit 2 is essentially closed to limit the energy consumption for drying of the material and to minimize emissions from the dryer. In operation of the pneumatic steam dryer 1, the circulation conduit 2 is pressurized above atmospheric pressure and filled with drying medium 3 such as superheated or saturated steam. The drying medium is hereafter called drying steam. The internal environment of the circulation conduit is substantially oxygen free and inert which eliminates the risk of hazardous dust explosions. The oxygen content is preferably below 2%, more preferably below 0,5%. The circulation conduit further comprises ducts and couplings for conducting bulk material 13 and drying steam 3 between the elements of the pneumatic steam dryer. The circulation conduit 2 and other elements of the dryer 1 are adapted to be pressurized.

An inlet feeding device 5 is connected to a bulk material inlet 4 of the circulation conduit 2 for feeding bulk material to the dryer.

The inlet feeding device 5 is connected to a bulk material inlet of the circulation conduit 2 downstream of a first and second heat exchanger 9.1,10.1 in relation to the flow direction of the drying steam.
Wet bulk material 13 is continuously or batch wise fed to the circulation conduit by the inlet feeding device. The inlet feeding device 5 typically comprises a pressure-tight cellular feeder, a plug screw feeder or a similar feeding device which is adapted to avoid pressure loss from the circulation conduit and only provides for a marginal drying steam leakage at the actual differential pressure between the outside pressure (typically atmospheric) of the pneumatic steam dryer and the pressure inside the circulation conduit.

A drying chamber 6 such as a drying conduit is connected to the circulation conduit 2 between the inlet feeding device 5 and separating means 7. The bulk material is dried by transferring heat from the drying steam 3 while the material is pneumatically conveyed to separating means 7. Moisture and volatiles such as hydrocarbons in the wet bulk material 13 evaporates and forms surplus steam 14. The temperature of the superheated drying steam decreases and consequently the moisture content of the bulk material is reduced.

The drying chamber 6 may alternatively comprise a drum drier or a fluidized bed dryer or similar drying chambers which can be connected to the circulation conduit.

Separating means 7 are connected to the circulation conduit downstream of the drying chamber 6 in relation to the conveying direction of the flow of drying steam and bulk material. The dried bulk material 13 suspended in drying steam is conveyed to separating means 7 for separating the bulk material from the drying steam.

The separating means 7 comprises at least one cyclone which separates the dried bulk material from the drying steam in a single step. The cyclone 7 also comprises a bulk material outlet 8 and a drying medium outlet 15.

The cyclone 7 discharges the dried bulk material from the dryer via discharging means 16 connected to the bulk material outlet of the separating means, the cyclone. The discharging means comprises typically a pressure-tight cellular feeder of the same kind as the inlet feeding device 5 described above.

The separated drying steam 3 is recirculated from the cyclone 7 via the drying medium outlet 15 to circulation conduit 2.

In particular when the bulk material 13 is originating from wood or forest products, the energy content in the dried bulk material is high and can be used for production of fuel pellets. The bulk material is therefore preferably dried to moisture content below 12 % by weight.

The circulation conduit comprises also a surplus steam outlet 12 for releasing pressurized surplus steam 14 evaporated from the bulk material. The surplus steam outlet 12 is connected to the circulation conduit downstream of the separating means 7 and upstream of the inlet feeding means 5 in relation to the flow direction of the drying steam. The operating conditions such as the pressure and/or the temperature of the pneumatic steam dryer 1 are thereby controlled and maintained. The drying steam 3 is typically impure and contains particles, terpens and hydrocarbons.

The surplus steam 14 is fed to steam recovery means 17. The substances in the surplus steam released from the dryer are collected by condensation in separate energy recovery means 17 connected to the dryer 1. The energy recovery means 17 comprises a steam regenerator or condenser. In the steam regenerator or condenser the surplus steam 14 is cooled and depleted, whereby clean steam and waste condensate is generated.

Fig. 1a further shows at least a first heat exchanger 9.1 and at least a second heat exchanger 10.1 serially connected to the closed circulation conduit 2 for heating the drying steam 3. The heat exchangers 9.1:10.1 are connected after, downstream of, the separating means 7 and before, upstream of, the inlet feeding device 5 in relation to the flow direction of the drying steam. This has the functional benefit that deposits of bulk material on heat conducting surfaces in the first and the second heat exchanger are prevented. The heat exchangers provide for indirect stepwise heating of the drying steam 3 by two separately supplied heating medium. Each heat exchanger corresponds to a separate heating step in the dryer.

In this specification the designation 'first heat exchanger' and 'second heat exchanger' determines the order of the at least two heat exchangers and defines that the drying medium is sequentially heated by one after the other.

Fig. 1a shows that the first heat exchanger 9.1 is connected to a first heat source 18 for receiving a first heating medium 9.4, and that the second heat exchanger 10.1 is connected to a second heat source 19 for receiving a second heating medium 10.4.

The first heat exchanger 9.1 corresponds to a first heating step in the dryer 1. The first heat exchanger 9.1 comprises a housing, a shell, comprising heat conducting surfaces 9.2, an inlet side 9.2a, an outlet side 9.2b, heating medium inlet, hereafter referenced as connecting means 9.3, and a heating medium outlet 9.5.

The heat conducting surfaces 9.2 comprise a plurality of longitudinally extended, straight open channels, i.e. tubes. The channels extend from an inlet side 9.2a to an outlet side 9.2b of the heat exchanger 9.1. The channels are made of a heat conducting material for transferring heat from the heating medium 9.4 to the drying steam. The channels thereby define a drying steam flow path through the first heat exchanger.
The heating medium 9.4 is conducted from the heating medium inlet, the connecting means 9.3, to the heating medium outlet 9.5 on the housing side of the channels 9.2.
The heat conducting surfaces 9.2 efficiently transfer heat from the first heating medium 9.4 supplied from the first heat source 18 to the drying steam 3.

The drying steam flow path is substantially straight to avoid pressure drop. The first heat exchanger 9.1 and the heat conducting surfaces 9.2, the channels, are selected and adapted to the conditions of the first heating medium 9.4 supplying heat from the first heat source 18 to achieve efficient heat transfer. The connecting means 9.3 comprises pipes and couplings for securely connecting the first heat exchanger 9.1 and the heat conducting surfaces 9.2 to a first heat source 18.

The first heating medium outlet 9.5 comprises ducts and couplings to enable a pressure-tight connection between the heat exchanger and external conduits for conveying the first heating medium from the first heat exchanger 9.1. Typically is the first heating medium returned to be reheated by the heat source, however, depending on the type of heating medium, other external heat recovery means are equally possible.

The second heat exchanger 10.1 corresponds to a second heating step in the dryer 1. The second heat exchanger 10.1 comprises a housing, a shell having heat conducting surfaces 10.2, heating medium inlet, hereafter also referenced connecting means 10.3, and a heating medium outlet 10.5. The second heat exchanger comprises an inlet side 10.2a and an outlet side 10.2b. The heat conducting surfaces 10.2 efficiently transfer heat from the second heating medium 10.4 supplied from the second heat source 19 to the drying steam 3. The connecting means 10.3 comprises pipes and couplings for securely connecting the second heat exchanger 10.1 and the heat conducting surfaces 10.2 to a second heat source 19. The second heat exchanger 10.1 and the first heat exchanger 9.1 have similar features and functions, the second heat exchanger 10.1 is therefore not further described.

A heat exchanger of this type is known as a shell and tube heat exchanger.
The shell and tube heat exchanger is particularly advantageous when large amounts of fluid are to be heated or cooled. Due to the design, this type of heat exchanger offers a large heat transfer area and provide high heat transfer efficiency. There are different types of shell and tube heat exchangers such as counter-current type or co-current type. The heating medium flows from a heating medium inlet to a heating medium outlet. The heating medium flows on the shell side of the channels for enabling conductive heat transfer between the heating medium and the gaseous medium flowing inside the channels. It is to be noted that the present invention is not limited to the counter-current type but may be of other types too.

It is to be noted that the invention is not limited to this type of heat exchanger. Alternatively may the heat exchangers be of other types and the heat conducting surfaces may comprise coils, plates, fins or other type of surfaces which have high heat transfer efficiency.

Moreover, the first heat exchanger and/or the second heat exchanger are configured as a gas/gas heat exchanger, a liquid/gas heat exchanger or a condenser. The dryer comprises advantageously a combination of different types of heat exchangers. Alternatively are the first heat exchanger and the second heat exchanger of the same type. If the heating medium comprises a condensable medium such as steam, is the receiving heat exchanger preferably designed as a condenser. If the heating medium comprises thermal oil, is the receiving heat exchange preferably a plate heat exchanger.

The principles of a heat exchanger are known since long and there are a large variety of heat exchangers available on the market. The skilled person can select, adapt and integrate commonly known heat exchangers to fit into a dryer according the invention based on information relating to the energy levels in the accessible heat from the heat sources, the selected type of heating medium transferring the heat and parameters regarding the drying steam which is to be heated to achieve stepwise heating to a desired temperature level. Moreover, also connecting means, fittings and pipes and other additional equipment are selected and adapted to be suitable for conveying the first heating medium and the second heating medium from the heat sources to the first and the second heat exchanger.

The dryer 1 is supplied with heat from a first heat source 18 and a second heat source 19. The first heating medium 9.4 and the second heating medium 10.4 are selected so to provide efficient heat transfer from the accessible heat sources 18;19 to the first heat exchanger 9.1 and the second heat exchanger 10.1. Hence the first heat exchanger 9.1 is supplied with heat from the first heat source 18, and the second heat exchanger 10.1 is supplied with heat from the second heat source 19. Suitable heat sources are for instance a steam turbine or a combustion chamber in steam generation plant or waste heat from an external industry such as a saw mill, paper and pulp factory, a smelting plant or other heavy industry. The first heat exchanger 9.1 and the second heat exchanger 10.1 may alternatively be supplied from a steam turbine having at least two steam outlets.

The dryer 1 shown in Fig. 1a is provided with a first heat source 18 comprising a steam turbine. The steam turbine supplies pressurized steam 9.4 to the first heat exchanger 9.1. The first heat exchanger 9.1 is therefore designed as a condenser. The first heat source 18 may alternatively comprise a combustion chamber or a boiler furnace or another suitable heat source in an external industry. The first heating medium 9.4 may alternatively comprise a different compressible medium such as hot flue gas or a non-compressible medium such as thermal oil or hot water. The first connecting means 9.3 is adapted to be suitable for conveying the first heating medium 9.4.
The dryer 1 shown in Fig. 1a is provided with a second heat source 19 comprising a combustion chamber. The combustion chamber supplies heat via the second heating medium 10.4 such as heated thermal oil to the second heat exchanger 10.1.
The second heat source 19 may alternatively comprise a stem turbine or a boiler furnace or another similar heat source in an external industry. The second heating medium 10.4 may alternatively comprise a different non-compressible medium such as hot water or a compressible medium such as pressurized steam or hot flue gas. The second connecting means 10.3 is adapted to be suitable for conveying the second heating medium 10.4.

In an alternative embodiment of the dryer 1 comprises the first heat exchanger 9.1 a shell and tube heat exchanger configured as a condenser supplied with pressurized steam from a steam turbine, and the second heat exchanger 10.1 comprises a shell and tube heat exchanger supplied with flue gases from a combustion chamber. The order of the condenser and the heat exchanger may be varied depending on the available heat sources.

In another alternative embodiment of the dryer 1 comprises the first heat exchanger 9.1 a shell and tube heat exchanger configured as a condenser and supplied with pressurized steam from a steam turbine, and the second heat exchanger 10.1 comprises a plate heat exchanger supplied with thermal oil from a heat source in an external industrial plant.

In some applications is it beneficial to supply the same type of heating medium to the first heat exchanger and the second heat exchanger. It has to be noted that in such case are the first heating medium and the second heating medium different from one another in that they disclose different parameters such as pressure and/or temperature. The first heat exchanger 9.1 is therefore connected to the first heat source 18 via the first connecting means 9.3 and the second heat exchanger 10.1 is connected to the second heat source 19 via the second connecting means 10.3. Hence, said first connecting means 9.3 are separate from and unconnected to said second connecting means 10.3.

In another embodiment of the dryer 1 comprises both the first heat exchanger 9.1 and the second heat exchanger 9.2 a condenser. The first and the second heat exchanger are supplied by pressurized steam from two separate steam turbines.

The dryer 1 operates according to the following:
A flow of a drying steam is generated through the circulation conduit 2 by the fan 11, bulk material 13 such as wood chips is fed to the flow of drying steam 3 in the circulation conduit 2 by an inlet feeding device 5, the bulk material 13 is dried in the drying chamber 6 by transferring heat from the drying steam 3, the bulk material 13 is separated from the drying steam by separating means 7 where after the bulk material is discharged from the dryer 1. A first heating medium 9.4, such as pressurized steam, is supplied to a first heat exchanger 9.1, and a second heating medium 10.4 such as thermal oil, is supplied to a second heat exchanger 10.1. A first heating step is carried out wherein the drying steam 3 is conveyed to the first heat exchanger 9.1 and is indirectly heated by the pressurized steam, followed by a second heating step wherein the drying steam 3 is conveyed to the second heat exchanger 10.1 and is indirectly heated by the thermal oil.

After separating the bulk material from the drying steam in the separating means 7, is the steam recirculated in the circulation conduit of the dryer. The recirculated drying steam from the separating means 7 is typically saturated or slightly superheated. The temperature of the drying medium is preferably increased to a desired temperature level before feeding bulk material by the inlet feeding means 5 to the flow of drying medium generated by the fan 11.

According to another embodiment of the invention comprises the process that the drying steam is superheated by the first heat exchanger 9.1 and the second heat exchanger 10.1. This means that at a specific operating pressure inside the dryer is the steam heated by the first heat exchanger 9.1 and the second heat exchanger 10.1 to a temperature above the saturation temperature of the drying steam. This is particularly advantageous since the superheated steam increases the evaporation rate and improves the drying efficiency.

The first heating medium 9.4, the pressurized steam, is supplied to the first heat conducting surfaces 9.2 at a first heating medium temperature t1. The second heating medium, the thermal oil is supplied to the second heat conducting surfaces 10.2 at a second heating medium temperature t2. The temperature t1 of the first heating medium 9.4 is measured at the inlet 9.2a of the first heat exchanger 9.1 and the temperature t2 of the second heating medium 10.4 is measured at the inlet 10.2a of the second heat exchanger 10.5. The second heating medium temperature t2 is preferably higher than said first heating medium temperature t1 (t2>t1). This has the effect that the drying medium 3 is heated stepwise in the circulation conduit.

The embodiment of the dryer 1 shown in Fig. 1a discloses one example of combination of a first and a second heat source and a first and a second heating medium supplied to the first and the second heat exchanger 9.1;10.1. However, depending on the accessible heat sources and the energy content in the available heating medium can the type of heating medium and/or the order of supply of the heating medium be interchanged.
The dryer 1 shown in Fig.1a also has a fan 11 connected to the circulation conduit 2 for generating a flow of drying steam 3 for conveying the bulk material through the circulation conduit from the inlet feeding device 5 to the separating means 7. The fan comprises a ventilator, a blower or an ejector. The position of the fan 11 in the circulation conduit is adapted according to the available energy supply from different heat sources. The bulk material 13 is preferably not conveyed through the fan. The fan 11 is therefore connected to the circulation conduit subsequently to the separating means 7 and prior to the inlet feeding device 5 in relation to the conveying direction of the drying steam. The position of the fan in the circulation conduit is further described below.

In the dryer 1 shown in Fig. 1a is the first heat exchanger 9.1 serially connected to the circulation conduit 2 subsequently to the separating means 7 and in advance of the fan 11 in relation to the conveying direction of the drying steam 3. The fan 11 is then followed by at least the second heat exchanger 10.1.

An alternative embodiment of the dryer 1 has the fan 11 serially connected to the circulation conduit subsequently to the separating means 7 and in advance of, upstream of, the first heat exchanger 9.1 in relation to the conveying direction of the drying steam 3. As previously mentioned, this is beneficial to the workload of the fan.

Another alternative embodiment of the dryer 1 has both the first and the second heat exchanger 9.1; 10.1 serially connected to the circulation conduit in advance of the fan 11 in relation to the conveying direction of the drying steam (not shown in figures).

Fig. 1b shows that an additional heat exchanger, a third heat exchanger 20.1, optionally may be connected to the circulation conduit 2. The third heat exchanger 20.1 is serially connected to the circulation conduit downstream of the inlet feeding means 5 and upstream of the separating means 7 in relation to the flow direction of the drying steam.
The third heat exchanger 20.1 corresponds to a third heating step. The third heat exchanger comprises third heat conducting means 20.2 and third connecting means 20.3. The third heat exchanger 20.1 and the third heat conducting means 20.2 are connected to a third heat source via the third connecting means 20.3. The third heat exchanger 20.1 supplies heat from a third heat source via a third heating medium 20.4. The third heat source comprises a steam turbine, combustion chamber or similar. The bulk material 13 is conveyed through the third heat exchanger 20.1. The third heat exchanger is therefore adapted accordingly.
The evaporation of the moisture in the bulk material 13 lowers the drying medium temperature in the drying chamber 6. The moisture content in the bulk material varies throughout the season and the third heat exchanger provides for flexibility in the heat supply to accommodate for this variation. This further enables improved control of the drying process.
According to another embodiment of the dryer 1 are one or more additional heat exchangers, such as a third and/or a fourth heat exchanger, serially connected to the circulation conduit for further heating of the drying medium in addition to the first heat exchanger and the second heat exchanger. (Not shown in figures.) The third and /or the fourth heat exchanger are supplied with a third and/or fourth heating medium from a further heat source. The third and /or the fourth heat exchanger are designed and operated in a similar manner as the first heat exchanger and second heat exchanger. The third and/or the fourth heat exchangers may be connected before, in between or after the first and/or second heat exchangers 9.1; 10.1 upstream of the inlet feeding device 5. The drying steam is then indirectly heated by a third or fourth heating medium. Such an arrangement improves the flexibility of integration of the dryer into different industrial environments.

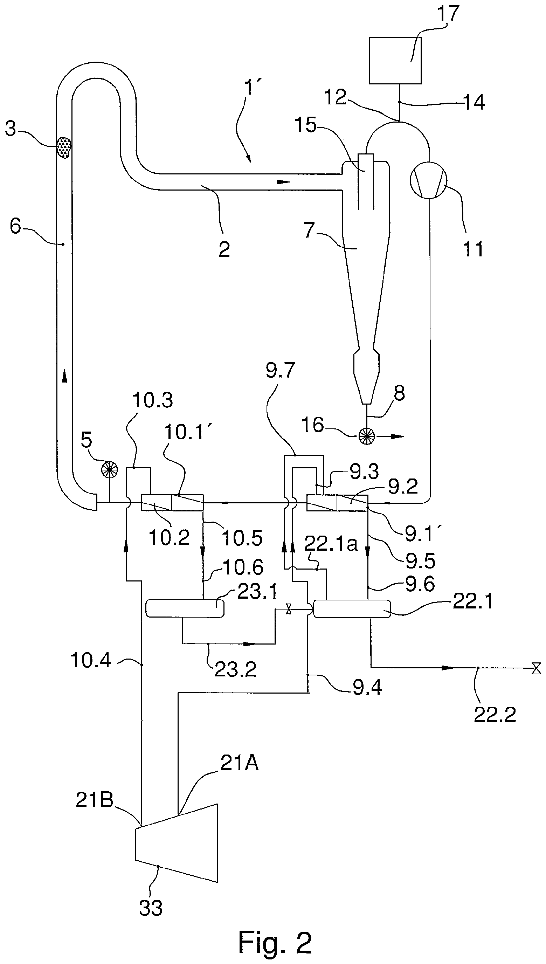

Fig. 2 shows an embodiment of a dryer 1' carrying out the process according to the invention. Features of the first heat exchanger 9.1' and the second heat exchanger 10.1' which corresponds to features of the previously described first heat exchanger 9.1 and the second heat exchanger 10.1 are not further described here. Like features are like referenced. The first heat exchanger 9.1' and the second heat exchanger 10.1' differs from the previously described heat exchangers in that they are configured as condensers, and in that the first heat exchanger 9.1' and the second heat exchanger 10.1' further comprises condensate receptacles 22.1; 23.1 which are described below.
Furthermore, the first and the second heat exchanger 9.1'; 10.1' are preferably construed as tube and shell heat exchanger, however the heat conducting surfaces 9.2; 10.2 are adapted with suitable surfaces and materials for efficient condensation of the first heating medium 9.4 and second heating medium 10.4; pressurized steam. The first heat exchanger 9.1' is also configured with a steam duct 9.7, further described below.

Fig. 2 also shows a power generating steam turbine 33 having at least a first and a second steam outlet 21A, 21B. The first steam outlet 21A releases pressurized steam at a first pressure level P1. The second steam outlet 21B releases pressurized steam at a second pressure level P2. The parameters of the pressurized steam released from the first steam outlet 21A and the parameters of the pressurized steam released from the second steam outlet 21B are different, each steam outlet 21A, 21B therefore constitutes a separate heat source.
The steam turbine 33 is further connected into a steam power plant (not shown in figure). The dryer 1' differs from the previously described dryer 1 in that the first heat exchanger 9.1' is connected to the first outlet 21A via the first connecting means 9.3, and the second heat exchanger 10.1' is connected to the second outlet 21B via the second connecting means 10.3.

The first heating medium 9.4, pressurized steam, is extracted from the steam turbine 33 at a first pressure level P1 and is supplied to the first heat exchanger 9.1'. The second heating medium 10.4, pressurized steam, is extracted from the steam turbine 33 at a second pressure level P2 and is supplied to the second heat exchanger 10.1'. Advantageously, the first pressure level P1 is lower than the second pressure level P2. For example, in one embodiment of the dryer is the first heating medium pressure P1, 10 Bar and the second heating medium pressure P2, 20 Bar.

This has the effect that the drying steam 3 is stepwise heated in the circulation conduit 2 while the first heating medium 9.4 and second heating medium 10.4, the pressurized steam condenses or cools down significantly.

It is particularly energy efficient to use a power generating steam turbine 33 as heat source to the dryer 1'. Pressurized steam is advantageously extracted from the steam turbine at several steam outlets disclosing different steam pressure levels, since the thermal efficiency of the steam turbine 33 improves.

The pressurized steam condenses fully or partially inside the first heat exchanger 9.1' and the second heat exchanger 10,1', both configured as condensers. The level of condensation depends on the temperature of the drying steam 3 which also determines the steam pressure inside each heat exchanger.

The dryer shown in Fig. 2 comprises a first condensate receptacle 22.1 and a second condensate receptacle 23.1. The first condensate receptacle 22.1 is connected to a first heating medium outlet 9.5 and collects the first heating medium condensate 9.6 and if any, also the insufficiently condensed first heating medium 9.4. The steam pressure in the first condensate receptacle 22.1 corresponds to the pressure P1 of the first heating medium. The second condensate receptacle 23.1 is connected to a second heating medium outlet 10.5 and collects the second heating medium condensate 10.6 and if any, also the insufficiently condensed second heating medium 10.4. The pressure in the second condensate receptacle 23.1 corresponds to the pressure P2 of the second heating medium 10.4.

The second condensate receptacle 23.1 is furthermore also connected to and in fluid communication with the first condensate receptacle 22.1 via condensate connecting means 23.2. The second heating medium condensate 10.6 in the second condensate receptacle 23.1 exhibiting pressure P2 is conducted to the first condensate receptacle 22.1 exhibiting pressure P1, where P1 is lower than P2 (P2>P1) via condensate connecting means 23.2.

This has the effect that the second heating medium condensate 10.6 is depressurized and flash steam 22.1a exhibiting pressure P1 is generated in the first condensate receptacle 22.1.

The first condensate receptacle 22.1 is connected to the steam duct 9.7 of the first heat exchanger 9.1'. The generated flash steam 22.1a is conducted to the first heat exchanger 9.1' via the steam duct 9.7 and is recovered in the heat exchanger 9.1', which further improves the energy efficiency of the dryer 1'.

The condensate 9.6 from the first heating medium 9.4 is conducted from the first receptacle 22.1 via condensate outlet 22.2 to further means for heat recovery; hence the energy efficiency of the dryer is further improved.

In another embodiment of the dryer 1' is the first heating medium condensate 9.6 recovered in the first condensate receptacle 22.1 and the second heating medium condensate 10.6 is recovered in second condensate receptacle 23.1.The receptacles 22.1;23.1 conduct the collected condensate to further means for heat recovery, thereby is the energy efficiency of the dryer improved. It is to be noted that the present invention is not limited to this embodiment having two separate condensate receptacles. The condensate receptacles may be combined in one condensate receptacle unit with several separately arranged pressurized chambers.

It is to be noted that the dryer 1' may also be configured with an optional third heat exchanger 20.1 and/or further additional heat exchangers described above.

It is also to be noted that the fan 11 may be connected in different locations in the dryer 1' as described above.

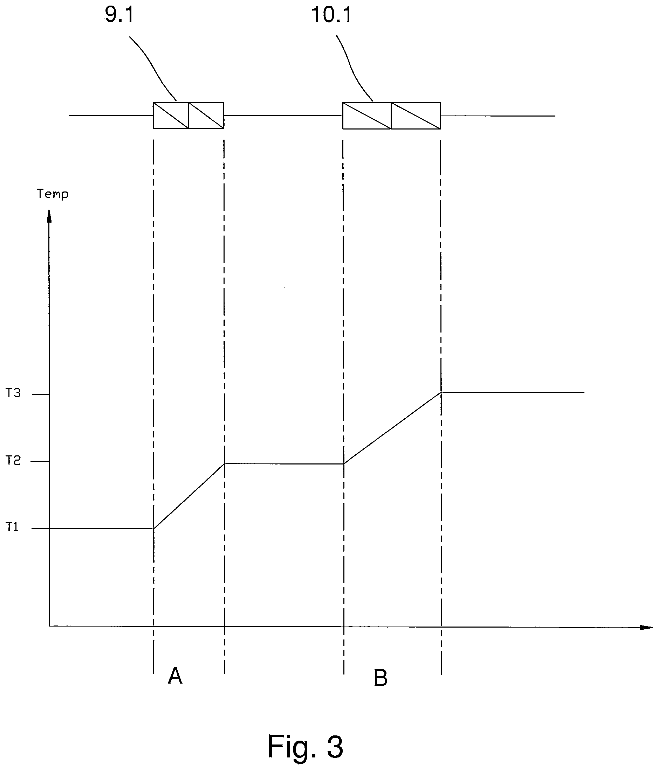

Fig. 3 shows an example of stepwise heating of drying steam 3 present in a dryer 1 according to the invention. The drying medium temperature increases in a first heating step (in the figure referenced A), from temperature T1 to T2 in the first heat exchanger 9.1, and in a second step (in the figure referenced B), from the temperature T2 to T3 in the second heat exchanger. In one example of the process and dryer is the drying steam heated from approximately 180 °C to 200 °C by a first heating medium in the first heat exchanger followed by heating the drying steam from approximately 200 °C to 220 °C by a second heating medium in the second heat exchanger.

The drying steam 3 is preferably heated to a superheated phase by the first and the second heat exchanger 9.1:10.1 prior to feeding the wet bulk material 13 to the flow of drying steam 3. The first heat exchanger 9.1 and the second heat exchanger 10.1 have different operating conditions, in particular since the temperature of the drying medium introduced to each heat exchanger differs. The operating conditions of the heat exchangers are furthermore separately and independently controlled by controlling means.

The heat transfer in the first and the second heat exchanger is efficiently carried out independently of the operating pressure level inside the dryer 1;1'. However, the energy recovery of the latent heat in the surplus steam 14 is more efficient when the dryer 1;1' is operated above atmospheric pressure.

This means that the overpressure range is from 0.1 to 40 Bar. Advantageously is the dryer operated at an overpressure of 0.5-10 Bar. In particular when material of wooden origin like wood chips or saw dust is dried in the dryer, it advantageous to operate the dryer at an overpressure of 1-6 Bar, more preferably at an overpressure of 2-5 Bar. This pressure range corresponds to steam saturation temperatures of about 102-260 degrees Celsius.
According to an alternative embodiment of the invention is the dryer 1;1' operated below atmospheric pressure.

The pneumatic steam dryer 1;1' is particularly suitable for drying bulk material such as wood based material, peat and/or agricultural material. It is to be noted that the dryer 1;1' according to the invention is also suitable for drying other materials.

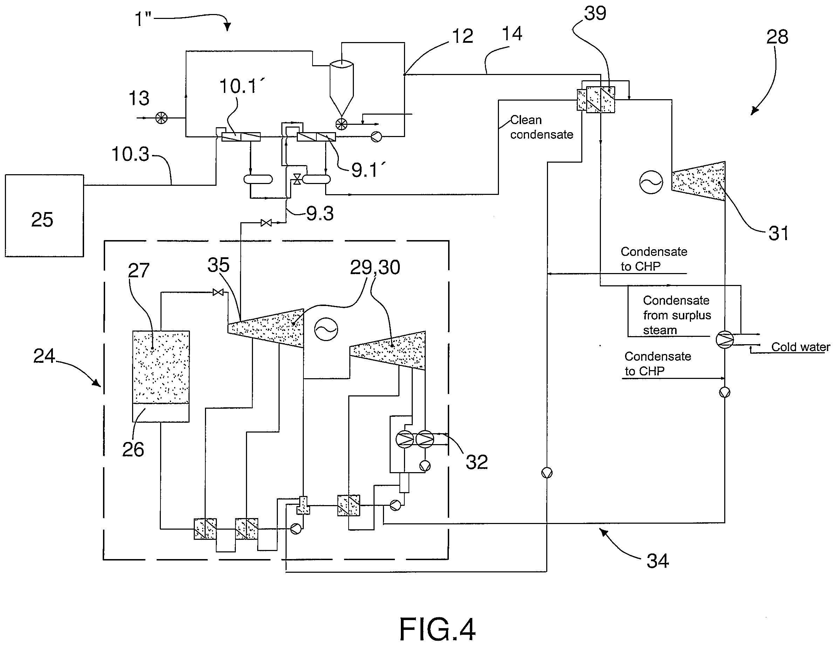

Fig. 4 shows a schematic flow scheme of one embodiment of a bio energy combine 34 comprising a steam generation plant 24 such as a combined heat and power plant (CHP), steam recovery means 28 and a dryer 1" for drying bulk material according to the invention. The combined heat and power plant 24 supplies heat to the dryer 1". Fig. 4 also shows an external industrial plant 25 supplying heat to the dryer 1". Like references are used for like features. The steam generation plant may alternatively comprise a steam power plant or similar power production facility.

The combined heat and power plant 24 comprises a combustion chamber 26, a boiler 27, a first steam turbine 29 and a second steam turbine 30 and heat supply connections to a district heating net 32. The combustion chamber 26 is connected to the boiler 27 and the steam turbines 29; 30.

The first steam turbine 29 comprises a first steam outlet 35, a second steam outlet 36, a third steam outlet and a fourth steam outlet. Each one of the first, the third and the fourth steam outlet 35 comprises a bleeder outlet or an extraction outlet. The second steam outlet 36 comprises an exhaust outlet.
The steam recovery means 28 comprises a steam heat exchanger 39 and a low pressure turbine 31.
The dryer 1" comprises a first heat exchanger 9.1' and a second heat exchanger 10.1' and a surplus steam outlet 12. The heat exchangers are configured as shell and tube heat exchangers designed as condensers.

The steam outlet 35 is connected to the first heat exchanger 9.1' via the connecting means 9.3. The steam turbine 29 supplies pressurized steam at a first pressure level P1 to the first heat exchanger 9.1' to indirectly heat the drying steam in the circulation conduit of the dryer 1". This has the functional benefit that a separate condenser for the operation of the steam turbine 29 is unnecessary. This also improves the thermal efficiency of the steam turbine 29 and the energy efficiency of the combination of the dryer and the steam generation plant. It is particularly beneficial to combine a dryer 1" according to the invention with a combined heat and power plant. Furthermore, the seasonal variations in the demand of power and heat from the combined heat and power plant are met, and seasonal overcapacity of power and heat is made useful in the dryer 1".

The second steam turbine 30 is connected to the second steam outlet 36 of the first steam turbine via a steam inlet. The second steam turbine comprises a steam outlet 48 which is configured as an exhaust outlet. The exhausted steam from the steam outlet 48 is condensed in condensers in a district heating net 32.

The steam heat exchanger 39 is connected to a surplus steam outlet 12 of the dryer 1", such that the surplus steam 14 released from the dryer is supplied to and recovered in the steam heat exchanger 39. The steam heat exchanger 39 is connected to a low pressure turbine 31 which receives the clean steam from the steam heat exchanger, the energy from the dryer 1" is thereby recovered in the low pressure turbine 31.

The industrial plant 25 such as a steel factory, a smelting plant or a paper and pulp mill, produces a surplus of pressurized steam. The pressurized steam is efficiently used for heating the drying steam in a dryer 1" according to the invention. The industrial plant 25 is connected to the second heat exchanger 10.1' via connecting means 10.3. Pressurized steam at a second pressure level P2 is thereby supplied from the industrial plant to the second heat exchanger 10.1'. The second pressure level P2 is higher than the first pressure level P1.

The drying steam present in the circulation conduit of the dryer 1" is thereby stepwise indirectly heated by pressurized steam from two different heat sources.
The dryer 1" produces dried bulk material which is typically used as fuel in combustion chambers in industrial or commercial or domestic applications. The dryer may supply fuel to the combustion chamber in the steam generation plant 26.

The dryer 1" for drying bulk material 13 and carrying out the process according to the invention is thereby used in combination with a steam generation plant 34 comprising a combustion chamber 26 and at least one power generating steam turbine 29.

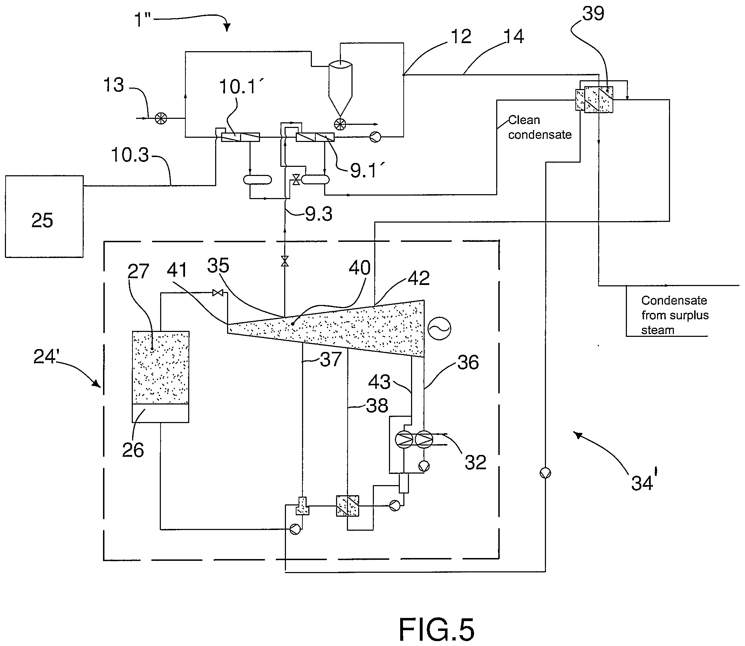

Fig. 5 shows a schematical flow scheme of another embodiment of a bio energy combine 34'. The bio energy combine 34' comprises a combined heat and power plant 24' and a dryer 1". Like references are used for like features.

The combined heat and power plant 24' differs from the previously described power plant 24 in that it comprises a steam turbine 40. The steam turbine 40 is provided with at least a first steam inlet 41 and at least a second steam inlet 42. The steam turbine 40 is thereby adapted to receive steam from at least two different sources having different steam parameters.

The steam turbine 40 is provided with a first steam outlet 35, a second steam outlet 36, a third steam outlet 37 and a fourth steam outlet 38 and a fifth steam outlet 43. Each one of the first, the third, the fourth and the fifth and the sixth steam outlet, 35, 37, 38, 43 comprises a bleeder outlet or an extraction outlet. The second steam outlet 36 comprises an exhaust outlet.

The boiler 27 is connected to the first steam inlet 41 of the steam turbine 40 and the steam heat exchanger 39 is connected to the second steam inlet 42 of the steam turbine 40. The steam heat exchanger 39 recovers the surplus steam from the dryer 1" and supplies clean steam to the steam turbine 40. The steam turbine 40 is thereby supplied with steam from two different sources. The steam pressure of the steam supplied to the first steam inlet 41 is higher than the steam pressure of the steam supplied to the second steam inlet 42. This has the advantage that the energy in the surplus steam from the dryer is recovered and the efficiency of the bio energy combine improves.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including", and "contains" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

## Claims

1. Process for drying bulk material in pneumatic dryer (1,1',1") having a closed circulation conduit (2), the process having the steps :
- generating a flow of a drying medium through the circulation conduit (2),
- feeding bulk material (13) to the flow of drying medium (3) in the circulation conduit (2) by an inlet feeding device (5),
- drying the bulk material (13) in a drying conduit by transferring heat from the drying medium (3),
- separating the bulk material (13) from the drying medium by separating means (7),
- discharging the bulk material from the dryer (1,1',1"),
- supplying a first heating medium (9.4) to a first heat exchanger (9.1;9.1'),
- a first heating step wherein the drying medium (3) is conveyed to the first heat exchanger (9.1 ;9.1') and is indirectly heated by the first heating medium (9.4),
the process being **characterized by**:
- supplying a second heating medium (10.4) to a second heat exchanger (10.1;10.1'),
- the first heating step is followed by a second heating step wherein the drying medium (3) is conveyed to the second heat exchanger (10.1;10.1') and is indirectly heated by the second heating medium (10.4),
and carrying out the first heating step and the second heating step prior to feeding bulk material (13) to the flow of drying medium (3) and
and supplying the first heating medium and the second heating medium from a steam turbine (33) and operate the first and the second heat exchanger as a steam turbine condensers,
and extracting the first heating medium (9.4) from a first steam outlet (21A) of a steam turbine (33) at a first heating medium pressure P1 and extracting the second heating medium (10.4) from a second steam outlet (21B) of the steam turbine (33) at a second heating medium pressure P2, wherein P1 is lower than P2.

2. A process according to any of the preceding claims **characterized in** supplying the first heat exchanger (9.1;9.1') and the second heat exchanger (10.1;10.1') with different types of heating medium.

3. A process according to any of the preceding claims **characterized in** supplying the first heat exchanger (9.1;9.1') and the second heat exchanger (10.1;10.1') with the same type of heating medium.

4. A process according to any of the preceding claims **characterized in** supplying the first heating medium (9.4) at a first heating medium temperature t1, and supplying the second heating medium (10.4) at a second heating medium temperature t2, wherein t2 differs substantially from t1.

5. A process according to any of the preceding claims **characterized in** supplying the first heating medium (9.4) at a first heating medium temperature t1, and supplying the second heating medium (10.4) at a second heating medium temperature t2, wherein t2 is essentially equal to t1.

6. A process according to any of the preceding claims **characterized in** supplying the first heating medium (9.4) at a first heating medium pressure P1, and supplying the second heating medium (10.4) at a second heating medium pressure P2, wherein P2 differs substantially from P1.

7. A process according to any the preceding claims **characterized in** supplying the first heating medium (9.4) at a first heating medium pressure P1, and supplying the second heating medium (10.4) at a second heating medium pressure P2, wherein P2 is essentially equal to P1.

8. A process according to any of the preceding claims **characterized in** supplying the first heating medium (9.4) from a turbine or a combustion chamber or an industrial process.

9. A process according to any of the preceding claims **characterized in** supplying the second heating medium (10.4) from a turbine or a combustion chamber or an industrial process.

10. A process according to any of the preceding claims **characterized in** supplying the first heat exchanger (9.1 ;9.1') with steam having pressure P1 and temperature t1 and supplying the second heat exchanger (10.1;10.1') with steam having pressure P2 and temperature t2, wherein t2 is essentially equal to t1, and P2 is substantially different from P1.

11. A process according to any of the preceding claims in which a dryer according to one or more of claims 12-19 is used.

12. A combination of a pneumatic dryer (1,1',1") for drying bulk material and a steam turbine for carrying out the process according to one or more of the claims 1-11, said dryer having:
- a closed circulation conduit (2) being adapted to be filled with a drying medium (3),
- a fan (11) connected to the circulation conduit (2) for generating a flow of drying medium (3),
- an inlet feeding device (5) connected to the circulation conduit (2) for feeding bulk material to the dryer,
- a drying conduit (6) connected to the circulation conduit (2) wherein the bulk material is dried by transferring heat from the drying medium (3),
- a separating means (7) connected to the drying conduit (6) for separating the bulk material from the drying medium (3),
- discharging means (16) connected to the separating means (7) for discharging the bulk material from the dryer,
- that at least a first heat exchanger (9.1;9.1') and at least a second heat exchanger (10.1;10.1') are serially connected to the circulation conduit for heating the drying medium, and that the first heat exchanger (9.1;9.1') is suitable to be supplied with a first heating medium (9.4),
**characterized in that** the second heat exchanger (10.1;10.1') is suitable to be supplied with a second heating medium (10.4), and that the first heat exchanger (9.1;9.1') and the second heat exchanger (10.1;10.1') are connected to the circulation conduit (2) downstream of the separating means (7) and upstream of the inlet feeding device (5) in relation to the flow direction of the drying medium,
that the steam turbine (29;33;40) is provided with a first steam outlet (21A; 35) and a second steam outlet (21B;36),
and **in that** the first heat exchanger (9.1;9.1') and the second heat exchanger (10.1;10.1') are connected to the steam turbine (33) and are operated as a steam turbine condensers, and that the first heat exchanger (9.1') is connected to the first outlet (21A) via a first connecting means (9.3), and the second heat exchanger (10.1') is connected to the second outlet (21B) via a second connecting means (10.3), and supplying the first heating medium (9.4) and the second heating medium (10.4) from the steam turbine (33) and operate the first and second heat exchanger as steam turbine condensers, and extracting the first heating medium (9.4) from a the first steam outlet (21A) of a the steam turbine (33) at a first heating medium pressure P1 and extracting the second heating medium (10.4) from a the second steam outlet (21B) of the steam turbine (33) at a second heating medium pressure P2, wherein P1 is lower than P2.

13. A combination of a pneumatic dryer and a steam turbine according to claim 12 **characterized in that** the fan (11) is connected to the circulation conduit (2) upstream of the first heat exchanger (9.1 ;9.1') in relation to the flow direction of the drying steam.

14. A combination of a pneumatic dryer and a steam turbine according to any of claims 12 or 13 **characterized in that** at least the first heat exchanger (9.1;9.1') is connected to the circulation conduit downstream of the separating means (7) and upstream of the fan (11) in relation to the flow direction of the drying medium (3).

15. A combination of a pneumatic dryer and a steam turbine according to any of claims 12-14 **characterized in that** the first heat exchanger (9.1;9.1') and the second exchanger (10.1;10.1') are serially connected to the circulation conduit upstream of the fan (11) in relation to the flow direction of the drying medium.

16. A combination of a pneumatic dryer and a steam turbine according to any of claims 12-15 **characterized in that** a first condensate receptacle (22.1) is connected to the first heat exchanger (9.1;9.1') for collecting a first heating medium condensate (9.6), and **in that** a second condensate receptacle (23.1) is connected to the second heat exchanger (10.1;10.1') for collecting a second heating medium condensate (10.6).

17. A combination of a pneumatic dryer and a steam turbine according to claim 16 **characterized in that** the second condensate receptacle (23.1) is connected to the first condensate receptacle (22.1).

18. A combination of a pneumatic dryer and a steam turbine according to claims 16 or 17 **characterized in that** the first condensate receptacle is connected to the first heat exchanger (9.1;9.1') via a steam duct (9.7).

19. A combination of a pneumatic dryer and a steam turbine according to any of the claims 12-18 **characterized in that** an additional heat exchanger (20.1) is serially connected to the circulation conduit downstream of the inlet feeding means (5) and upstream of the separating means (7) in relation to the flow direction of the drying medium.

20. Bio energy combine comprising a steam generation plant and a pneumatic dryer (1,1',1") wherein the steam generation plant (24;24') comprises at least one steam turbine (29;33;40), and **characterized in that** the pneumatic dryer and the at least one steam turbine (29;33;40) of the steam generation plant (24;24') are the combination of a pneumatic dryer and a steam turbine according to one or more of claims 12-14, and that the steam turbine (29;33;40) is connected to the first heat exchanger (9.1) and/or the second heat exchanger (10.1) of the dryer (1,1',1") for supplying steam as heating medium to the dryer.

21. Bio energy combine according to claim 20 **characterized in that** the dryer (1,1',1") comprises a surplus steam outlet (14) and **in that** a steam heat exchanger (39) is connected to the surplus steam outlet (14) for recovering the heat in the surplus steam from the dryer.

22. Bio energy combine according to claims 20 or 21 **characterized in that** the steam turbine (29;33;40) is provided with at least a first steam outlet (21A; 35) and at least a second steam outlet (21B;36) .

23. Bio energy combine according to any of claims 20-22 **characterized in that** the steam turbine (40) is provided with at least a first steam inlet (41) and at least a second steam inlet (42).

24. Bio energy combine according to any of claims 20-23 **characterized in that** the steam heat exchanger (39) is connected to the second steam inlet (42) of the steam turbine (40) for supplying clean steam to the steam turbine.

## Patentansprüche

1. Verfahren zum Trocknen von Schüttgut in einem pneumatischen Trockner (1,1',1"), der eine Leitung eines geschlossenen Kreislaufs (2) aufweist, wobei das Verfahren die folgenden Schritte umfasst:
- Erzeugen einer Strömung eines Trocknungsmediums durch die Kreislaufleitung (2),
- Zuführen von Schüttgut (13) zur Strömung von Trocknungsmedium (3) in der Kreislaufleitung (2) mittels einer Zufuhrvorrichtung (5),
- Trocknen des Schüttguts (13) in einer Trocknungsleitung durch Übertragung von Wärme von dem Trocknungsmedium (3),
- Trennen des Schüttguts (13) von dem Trocknungsmedium durch Trennmittel (7),
- Entnahme des Schüttguts von dem Trockner (1,1',1"),
- Zuführen eines ersten Heizmediums (9.4) zu einem ersten Wärmetauscher (9.1:9.1'),
- einen ersten Schritt des Beheizens, wobei das Trocknungsmedium (3) zu dem ersten Wärmetauscher (9.1;9.1') gefördert wird und durch das erste Heizmedium (9.4) indirekt beheizt wird,
**wobei das Verfahren durch Folgendes gekennzeichnet ist:**
- Zuführen eines zweiten Heizmediums (10.4) zu einem zweiten Wärmetauscher (10.1;10.1'),
- der erste Schritt des Beheizens von einem zweiten Schritt des Beheizens gefolgt wird, wobei das Trocknungsmedium (3) zu dem zweiten Wärmetauscher (10.1:10.1') gefördert wird und durch das zweite Heizmedium (10.4) indirekt beheizt wird,
und Ausführen des ersten Schrittes des Beheizens und des zweiten Schrittes des Beheizens vor dem Zuführen von Schüttgut (13) zur Strömung von Trocknungsmedium (3) und
und Versorgung des ersten Heizmediums und des zweiten Heizmediums aus einer Dampfturbine (33) und Betreiben des ersten und des zweiten Wärmetauschers als Dampfturbinenkondensatoren,
und Extrahieren des ersten Heizmediums (9.4) aus einem ersten Dampfausgang (21A) einer Dampfturbine (33) bei einem ersten Heizmediumdruck P1 und Extrahieren des zweiten Heizmediums (10.4) aus einem zweiten Dampfausgang (21B) der Dampfturbine (33) bei einem zweiten Heizmediumdruck P2, wobei P1 niedriger als P2 ist.

2. Verfahren nach einem der vorgehenden Ansprüche, **gekennzeichnet durch** Versorgen des ersten Wärmetauschers (9.1 ;9.1') und des zweiten Wärmetauschers (10.1;10.1') mit verschiedenen Typen von Heizmedium.

3. Verfahren nach einem der vorgehenden Ansprüche, **gekennzeichnet durch** Versorgen des ersten Wärmetauschers (9.1 ;9.1') und des zweiten Wärmetauschers (10.1;10.1') mit demselben Typ von Heizmedium.

4. Verfahren nach einem der vorgehenden Ansprüche, **gekennzeichnet durch** Zuführen des ersten Heizmediums (9.4) bei einer ersten Heizmediumtemperatur t1 und Zuführen des zweiten Heizmediums (10.4) bei einer zweiten Heizmediumtemperatur t2, wobei sich t2 im Wesentlichen von t1 unterscheidet.

5. Verfahren nach einem der vorgehenden Ansprüche, **gekennzeichnet durch** Versorgen des ersten Heizmediums (9.4) bei einer ersten Heizmediumtemperatur t1 und Versorgen des zweiten Heizmediums (10.4) bei einer zweiten Heizmediumtemperatur t2, wobei t2 im Wesentlichen gleich t1 ist.

6. Verfahren nach einem der vorgehenden Ansprüche, **gekennzeichnet durch** Zuführen des ersten Heizmediums (9.4) bei einem ersten Heizmediumdruck P1 und Zuführen des zweiten Heizmediums (10.4) bei einem zweiten Heizmediumdruck P2, wobei sich P2 im Wesentlichen von P1 unterscheidet.

7. Verfahren nach einem der vorgehenden Ansprüche, **gekennzeichnet durch** Zuführen des ersten Heizmediums (9.4) bei einem ersten Heizmediumdruck P1 und Zuführen des zweiten Heizmediums (10.4) bei einem zweiten Heizmediumdruck P2, wobei P2 im Wesentlichen gleich P1 ist.

8. Verfahren nach einem der vorgehenden Ansprüche, **gekennzeichnet durch** Zuführen des ersten Heizmediums (9.4) aus einer Turbine oder einer Verbrennungskammer oder einem industriellen Verfahren.

9. Verfahren nach einem der vorgehenden Ansprüche, **gekennzeichnet durch** Zuführen des zweiten Heizmediums (10.4) aus einer Turbine oder einer Verbrennungskammer oder einem industriellen Verfahren.

10. Verfahren nach einem der vorgehenden Ansprüche, **gekennzeichnet durch** Versorgen des ersten Wärmetauschers (9.1;9.1') mit Dampf mit einem Druck P1 und einer Temperatur t1 und Versorgen des zweiten Wärmetauschers (10.1;10.1') mit Dampf mit einem Druck P2 und einer Temperatur t2, wobei t2 im Wesentlichen gleich t1 ist, und P2 sich im Wesentlichen von P1 unterscheidet.

11. Verfahren nach einem der vorgehenden Ansprüche, bei welchem ein Trockner nach einem oder mehreren der Ansprüche 12-19 verwendet wird.

12. Kombination eines pneumatischen Trockners (1,1',1") zum Trocknen von Schüttgut und einer Dampfturbine zum Durchführen des Verfahrens nach einem oder mehreren der Ansprüche 1-11, wobei der Trockner Folgendes aufweist:
- eine Leitung eines geschlossenen Kreislaufs (2), die ausgelegt ist, um mit einem Trocknungsmedium (3) gefüllt zu werden,
- ein Gebläse (11), das zur Erzeugung einer Strömung von Trocknungsmedium (3) mit der Kreislaufleitung (2) verbunden ist,
drying medium (3),
- eine Zufuhrvorrichtung (5), die zum Zuführen von Schüttgut in den Trockner mit der Kreislaufleitung (2) verbunden ist,
- eine mit der Kreislaufleitung (2) verbundene Trocknungsleitung (6), wobei das Schüttgut durch Übertragung von Wärme von dem Trocknungsmedium (3) getrocknet wird,
- ein mit der Trocknungsleitung (6) verbundenes Trennmittel (7) zum Trennen des Schüttguts von dem Trocknungsmedium (3),
- mit dem Trennmittel (7) verbundene Entnahmemittel (16) zur Entnahme des Schüttguts aus dem Trockner,
- dass mindestens ein erster Wärmetauscher (9.1;9.1') und mindestens ein zweiter Wärmetauscher (10.1;10.1') zum Beheizen des Trocknungsmediums mit der Kreislaufleitung in Reihe geschaltet sind, und dass der erste Wärmetauscher (9.1;9.1') geeignet ist, um mit einem ersten Heizmedium (9.4) versorgt zu werden,
**dadurch gekennzeichnet, dass** der zweite Wärmetauscher (10.1;10.1') geeignet ist, mit einem zweiten Heizmedium (10.4) versorgt zu werden, und dass der erste Wärmetauscher (9.1;9.1') und der zweite Wärmetauscher (10.1; 10.1') bezüglich der Strömungsrichtung des Trockungsmediums nach den Trennmitteln (7) und vor der Zufuhrvorrichtung (5) mit der Kreislaufleitung (2) verbunden sind,
dass die Dampfturbine (29;33;40) mit einem ersten Dampfausgang (21A; 35) und einem zweiten Dampfausgang (21B;36) versehen ist,
und dass der erste Wärmetauscher (9.1;9.1') und der zweite Wärmetauscher (10.1;10.1') mit der Dampfturbine (33) verbunden sind und als Dampfturbinekondensatoren betrieben werden, und dass der erste Wärmetauscher (9.1') über ein erstes Verbindungsmittel (9.3) mit dem ersten Ausgang (21A) und der zweite Wärmetauscher (10.1') über ein zweites Verbindungsmittel (10.3) mit dem zweiten Ausgang (21B) verbunden ist,
und Zuführen des ersten Heizmediums (9.4) und des zweiten Heizmediums (10.4) aus der Dampfturbine (33) und Betreiben des ersten und zweiten Wärmetauschers als Dampfturbinekondensatoren, und Extrahieren des zweiten Heizmediums (9.4) aus dem ersten Dampfausgang (21A) der Dampfturbine (33) bei einem zweiten Heizmediumdruck P1, und Extrahieren des zweiten Heizmediums (10.4) aus dem zweiten Dampfausgang (21B) der Dampfturbine (33) bei einem zweiten Heizmediumdruck P2, wobei P1 niedriger als P2 ist.

13. Kombination eines pneumatischen Trockners und einer Dampfturbine nach Anspruch 12, **dadurch gekennzeichnet, dass** das Gebläse (11) bezüglich der Strömungsrichtung des Trocknungsdampfes vor dem ersten Wärmetauscher (9.1;9.1') mit der Kreislaufleitung (2) verbunden ist.

14. Kombination eines pneumatischen Trockners und einer Dampfturbine nach einem der Ansprüche 12 oder 13, **dadurch gekennzeichnet, dass** der mindestens eine erste Wärmetauscher (9.1 ;9.1') bezüglich der Strömungsrichtung des Trocknungsmediums (3) nach den Trennmitteln (7) und vor dem Gebläse (11) mit der Kreislaufleitung verbunden ist.

15. Kombination eines pneumatischen Trockners und einer Dampfturbine nach einem der Ansprüche 12-14, **dadurch gekennzeichnet, dass** der erste Wärmetauscher (9.1;9.1') und der zweite Wärmetauscher (10.1:10.1') bezüglich der Strömungsrichtung des Trocknungsdampfes mit der Kreislaufleitung vor dem Gebläse (11) in Reihe geschaltet ist.

16. Kombination eines pneumatischen Trockners und einer Dampfturbine nach einem der Ansprüche 12-15, **dadurch gekennzeichnet, dass** eine erste Kondensataufnahme (22.1) mit dem ersten Wärmetauscher (9.1;9.1') zum Aufsammeln eines ersten Heizmediumkondensats (9.6) verbunden ist, und dass eine zweite Kondensataufnahme (23.1) mit dem zweiten Wärmetauscher (10.1;10.1') zum Aufsammeln eines zweiten Mediumkondensats (10.6) verbunden ist.

17. Kombination eines pneumatischen Trockners und einer Dampfturbine nach Anspruch 16, **dadurch gekennzeichnet, dass** die zweite Kondensataufnahme (23.1) mit der ersten Kondensataufnahme (22.1) verbunden ist.

18. Kombination eines pneumatischen Trockners und einer Dampfturbine nach Anspruch 16 oder 17, **dadurch gekennzeichnet, dass** die erste Kondensataufnahme über einen Dampfkanal (9.7) mit dem ersten Wärmetauscher (9.1:9.1') verbunden ist.

19. Kombination eines pneumatischen Trockners und einer Dampfturbine nach einem der Ansprüche 12-18, **dadurch gekennzeichnet, dass** ein weiterer Wärmetauscher (20.1) bezüglich der Strömungsrichtung des Trocknungsmediums nach den Zufuhrmitteln (5) und vor und den Trennmitteln (7) mit der Kreislaufleitung in Reihe verbunden ist.

20. Bioenergiekombinationseinrichtung umfassend eine Dampferzeugungsanlage und einen pneumatischen Trockner (1,1',1"), wobeidie Dampferzeugungsanlage (24;24') mindestens eine Dampfturbine (29;33;40) umfasst, und **dadurch gekennzeichnet, dass** der pneumatische Trockner und die mindestens eine Dampfturbine (29;33;40) der Dampferzeugungsanlage (24;24') die Kombination eines pneumatischen Trockners und einer Dampfturbine nach einem oder mehreren der Ansprüche 12-14 sind, und dass die Dampfturbine (29;33;40) mit dem ersten Wärmetauscher (9.1) und/oder dem zweiten Wärmetauscher (10.1) des Trockners (1,1',1") zum Zuführen von Dampf als Heizmedium in den Trockner verbunden ist.

21. Bioenergiekombinationseinrichtung nach Anspruch 20, **dadurch gekennzeichnet, dass** der Trockner (1,1',1") einen Überschussdampfausgang (14) umfasst, und dass ein Dampfwärmetauscher (39) mit dem Überschussdampfausgang (14) zur Gewinnung der Wärme im Überschussdampf vom Trockner verbunden ist.

22. Bioenergiekombinationseinrichtung nach Anspruch 20 oder 21, **dadurch gekennzeichnet, dass** die Dampfturbine (29;33;40) mit mindestens einem ersten Dampfausgang (21A; 35) und mindestens einem zweiten Dampfausgang (21B;36) versehen ist.

23. Bioenergiekombinationseinrichtung nach einem der Ansprüche 20-22, **dadurch gekennzeichnet, dass** die Dampfturbine (40) mit mindestens einem ersten Dampfeingang (41) und mindestens einem zweiten Dampfeingang (42) versehen ist.

24. Bioenergiekombinationseinrichtung nach einem der Ansprüche 20-23, **dadurch gekennzeichnet, dass** der Dampfwärmetauscher (39) mit dem zweiten Dampfeingang (42) der Dampfturbine (40) zum Zuführen von reinem Dampf in die Dampfturbine verbunden ist.

## Revendications

1. Procédé de séchage de matériau en vrac dans un séchoir pneumatique (1,1',1") comportant un conduit de circulation (2), le procédé comprenant les étapes consistant à :
- générer un écoulement d'un agent de séchage à travers le conduit de circulation (2),
- alimenter du matériau en vrac (13) à l'écoulement d'un agent de séchage (3) dans le conduit de circulation (2) par un dispositif d'alimentation d'entrée (5),
- sécher le matériau en vrac (13) dans un conduit de séchage par transfert de chaleur de l'agent de séchage (3),
- séparer le matériau en vrac (13) de l'agent de séchage par un moyen de séparation (7),
- évacuer le matériau en vrac du séchoir (1,1',1"),
- fournir un premier milieu de chauffage (9.4) à un premier échangeur de chaleur (9.1;9.1')
- une première étape de chauffage dans laquelle l'agent de séchage (3) est acheminé vers le premier échangeur de chaleur (9.1;9.1') et est chauffé indirectement par le premier milieu de chauffage (9.4),
**le procédé étant caractérisé par :**
- la fourniture d'un deuxième milieu de chauffage (10.4) à un deuxième échangeur de chaleur (10.1;10.1'),
- la première étape de chauffage est suivie par une deuxième étape de chauffage dans laquelle l'agent de séchage (3) est acheminé vers le deuxième chaleur échangeur (10.1;10.1') et est chauffé indirectement par le deuxième milieu de chauffage (10.4),
et la réalisation de la première étape de chauffage et de la deuxième étape de chauffage avant d'introduire le matériau en vrac (13) dans l'écoulement de l'agent de séchage (3)
et la fourniture de la première étape de chauffage et de la deuxième étape de chauffage à partir d'une turbine à vapeur (33) et exploiter le premier et le deuxième échangeur de chaleur en tant que condenseurs de turbine à vapeur, et l'extraction du premier milieu de chauffage (9.4) à partir d'une première sortie de vapeur (21A) d'une turbine à vapeur (33) à une première pression de milieu de chauffage P1 et l'extraction du deuxième milieu de chauffage (10.4) à partir d'une deuxième sortie de vapeur (21B) de la turbine à vapeur (33) à une deuxième pression de milieu de chauffage P2, P1 étant inférieure à P2.

2. Procédé selon l'une quelconque des revendications précédentes, **caractérisé en ce qu'**on alimente le premier échangeur de chaleur (9.1;9.1') et le deuxième échangeur de chaleur (10.1;10.1') avec différents types de milieux de chauffage.

3. Procédé selon l'une quelconque des revendications précédentes, **caractérisé en ce qu'**on alimente le premier échangeur de chaleur (9.1;9.1') et le deuxième échangeur de chaleur (10.1;10.1') avec le même type de milieux de chauffage.

4. Procédé selon l'une quelconque des revendications précédentes, **caractérisé en ce que** l'on fournit le premier milieu de chauffage (9.4) à une première température de milieu de chauffage t1, et l'on fournit le deuxième milieu de chauffage (10.4) à une deuxième température de milieu de chauffage t2, t2 étant essentiellement différente de t1.

5. Procédé selon l'une quelconque des revendications précédentes, **caractérisé en ce que** l'on fournit le premier milieu de chauffage (9.4) à une première température de milieu de chauffage t1, et l'on fournit le deuxième milieu de chauffage (10.4) à une deuxième température de milieu de chauffage t2, t2 étant essentiellement égale à t1.

6. Procédé selon l'une quelconque des revendications précédentes, **caractérisé en ce que** l'on fournit le premier milieu de chauffage (9.4) à une première pression de milieu de chauffage P1, et l'on fournit le deuxième milieu de chauffage (10.4) à une deuxième pression de milieu de chauffage P2, P2 étant essentiellement différente de P1.

7. Procédé selon l'une quelconque des revendications précédentes, **caractérisé en ce que** l'on fournit le premier milieu de chauffage (9.4) à une première pression de milieu de chauffage P1, et l'on fournit le deuxième milieu de chauffage (10.4) à une deuxième pression de milieu de chauffage P2, P2 étant essentiellement égale à P1.

8. Procédé selon l'une quelconque des revendications précédentes, **caractérisé en ce que** le premier milieu de chauffage (9.4) est fourni à partir d'une turbine ou d'une chambre de combustion ou d'un processus industriel.

9. Procédé selon l'une quelconque des revendications précédentes, **caractérisé en ce que** le deuxième milieu de chauffage (10.4) est fourni à partir d'une turbine ou d'une chambre de combustion ou d'un processus industriel.

10. Procédé selon l'une quelconque des revendications précédentes, **caractérisé en ce que** l'on fournit le premier échangeur de chaleur (9.1;9.1') en vapeur ayant la pression P1 et la température t1 et l'on fournit le deuxième échangeur de chaleur (10.1;10.1') en vapeur ayant la pression P2 et la température t2, t2 étant essentiellement égale à t1 et P2 étant essentiellement différente de P1.

11. Procédé selon l'une quelconque des revendications précédentes, dans lequel un séchoir selon l'une ou plusieurs des revendications 12 à 19 est utilisé.

12. Combinaison d'un séchoir pneumatique (1,1',1") pour sécher le matériau en vrac et d'une turbine à vapeur pour réaliser le procédé selon l'une ou plusieurs des revendications 1 à 11, ledit séchoir ayant :
- un conduit de circulation fermé (2) pouvant être rempli d'un agent de séchage (3),
- un ventilateur (11) relié au conduit de circulation (2) pour générer un écoulement d'agent de séchage (3),
- un dispositif d'alimentation d'entrée (5) relié au conduit de circulation (2) pour alimenter du matériau en vrac au séchoir,
- un conduit de séchage (6) relié au conduit de circulation (2) dans lequel le matériau en vrac est séché par transfert de chaleur de l'agent de séchage (3),
- un moyen de séparation (7) relié au conduit de séchage (6) pour séparer le matériau en vrac de l'agent de séchage (3),
- un moyen d'évacuation (16) relié au moyen de séparation (7) pour évacuer le matériau en vrac du séchoir,
- qu'au moins un premier échangeur de chaleur (9.1; 9.1') et au moins un deuxième échangeur de chaleur (10.1;10.1') sont reliés en série au conduit de circulation pour chauffer l'agent de séchage, et que le premier échangeur de chaleur (9.1;9.1') est approprié pour être alimenté d'un premier milieu de chauffage (9.4),
**caractérisé en ce que** le deuxième échangeur de chaleur (10.1;10.1') est approprié pour être alimenté d'un deuxième milieu de chauffage (10.4), et que le premier échangeur de chaleur (9.1; 9.1 ') et le deuxième échangeur de chaleur (10.1; 10.1') sont reliés au conduit de circulation (2) en aval du moyen de séparation (7) et en amont du dispositif d'alimentation d'entrée (5) en relation avec la direction d'écoulement de l'agent de séchage,
**que** la turbine à vapeur (29;33;40) est pourvue d'une première sortie de vapeur (21A; 35) et d'une deuxième sortie de vapeur (21B;36),
et **en ce que** le premier échangeur de chaleur (9.1;9.1') et le deuxième échangeur de chaleur (10.1;10.1') sont reliés à la turbine à vapeur (33) et sont exploités en tant que condenseurs de turbine à vapeur, et que le premier échangeur de chaleur (9.1') est relié à la première sortie (21A) par l'intermédiaire d'un premier moyen de raccordement (9.3), et le deuxième échangeur de chaleur (10.1') est relié à la deuxième sortie (21B) par l'intermédiaire d'un deuxième moyen de raccordement (10.3),
et l'alimentation du premier milieu de chauffage (9.4) et le deuxième milieu de chauffage (10.4) à partir de la turbine à vapeur (33) et exploiter les premier et deuxième échangeurs de chaleur en tant que condenseurs de turbine à vapeur, et l'extraction du premier milieu de chauffage (9.4) à partir d'une première sortie de vapeur (21A) d'une turbine à vapeur (33) à une première pression de milieu de chauffage P1 et l'extraction du deuxième milieu de chauffage (10.4) à partir d'une deuxième sortie de vapeur (21B) de la turbine à vapeur (33) à une deuxième pression de milieu de chauffage P2, P1 étant inférieure à P2.

13. Combinaison d'un séchoir pneumatique et d'une turbine à vapeur selon la revendication 12, **caractérisée en ce que** le ventilateur (11) est relie au conduit de circulation (2) en amont du premier échangeur de chaleur (9.1;9.1') en relation avec la direction d'écoulement de la vapeur de séchage.

14. Combinaison d'un séchoir pneumatique et d'une turbine à vapeur selon l'une quelconque des revendications 12 ou 13, **caractérisée en ce qu'**au moins le premier échangeur de chaleur (9.1;9.1') est relié au conduit de circulation en aval du moyen de séparation (7) et en amont du ventilateur (11) en relation avec la direction d'écoulement de l'agent de séchage (3).

15. Combinaison d'un séchoir pneumatique et d'une turbine à vapeur selon l'une quelconque des revendications 12 à 14, **caractérisée en ce que** le premier échangeur de chaleur (9.1:9.1') et le deuxième échangeur de chaleur (10.1;10.1') sont reliés en série au conduit de circulation en amont du ventilateur (11) en relation avec la direction d'écoulement de l'agent de séchage.

16. Combinaison d'un séchoir pneumatique et d'une turbine à vapeur selon l'une quelconque des revendications 12 à 15, **caractérisé en ce qu'**un premier réceptacle de condensat (22.1) est relié au premier échangeur de chaleur (9.1:9.1') pour collecter un premier condensat d'agent de chauffage (9.6), et **en ce qu'**un deuxième réceptacle de condensat (23.1) est relié au deuxième échangeur de chaleur (10.1; 10.1 ') pour collecter un deuxième condensat d'agent de chauffage (10.6).

17. Combinaison d'un séchoir pneumatique et d'une turbine à vapeur selon la revendication 16, **caractérisé en ce que** le deuxième réceptacle de condensat (23.1) est relié au premier réceptacle de condensat (22.1).

18. Combinaison d'un séchoir pneumatique et d'une turbine à vapeur selon la revendication 16 ou 17, **caractérisé en ce que** le premier réceptacle de condensat est relié au premier échangeur de chaleur (9.1;9.1') par l'intermédiaire d'un conduit de vapeur (9.7).

19. Combinaison d'un séchoir pneumatique et d'une turbine à vapeur selon l'une quelconque des revendications 12 à 18, **caractérisée en ce qu'**un échangeur de chaleur supplémentaire (20.1) est relié en série au moyen d'alimentation d'entrée (5) en aval du moyen de séparation (7) en relation avec la direction d'écoulement de l'agent de séchage.

20. Combinaison de bioénergie comprenant une installation de production de vapeur et un séchoir pneumatique (1,1',1") dans laquelle l'installation de production de vapeur (24;24') comprend au moins une turbine à vapeur (29;33;40), et **caractérisée en ce que** le séchoir pneumatique et l'au moins une turbine à vapeur (29;33;40) de l'installation de production de vapeur (24;24') font la combinaison d'un séchoir pneumatique et d'une turbine à vapeur selon l'une ou plusieurs des revendications 12 à 14, et que la turbine à vapeur (29;33;40) est reliée au premier échangeur de chaleur (9.1) et / ou au deuxième échangeur de chaleur (10.1) du séchoir (1,1',1") pour fournir de la vapeur en tant que milieu de chauffage au séchoir.

21. Combinaison de bioénergie selon la revendication 20, **caractérisée en ce que** le sécheur (1,1',1") comprend une sortie de vapeur excédentaire (14), et **en ce qu'**un échangeur de chaleur à vapeur (39) est relié à la sortie de vapeur excédentaire (14) pour récupérer la chaleur dans la vapeur excédentaire du séchoir.

22. Combinaison de bioénergie selon les revendications 20 ou 21, **caractérisée en ce que** la turbine à vapeur (29;33;40) est pourvue d'au moins une première sortie de vapeur (21A;35) et au moins une deuxième sortie de vapeur (21B;36).

23. Combinaison de bioénergie selon l'une quelconque des revendications 20 à 22, **caractérisée en ce que** la turbine à vapeur (40) est pourvue d'au moins une première entrée de vapeur (41) et d'au moins une deuxième entrée de vapeur (42).

24. Combinaison de bioénergie selon l'une quelconque des revendications 20 à 23, **caractérisée en ce que** l'échangeur de chaleur à vapeur (39) est relié à la deuxième entrée de vapeur (42) de la turbine à vapeur (40) pour fournir de la vapeur propre à la turbine à vapeur.
